# EUROPEAN PATENT SPECIFICATION

(11) **EP 2 973 171 B1**
(45) Date of publication and mention of the grant of the patent: **12.12.2018**
(21) Application number: 13877580.4
(22) Date of filing: 14.03.2013
(51) Int. Cl.: G06F 21/51, G06F 21/57, G06F 21/56, G06F 21/62, H04L 29/06

(54) **CONTEXT BASED SWITCHING TO A SECURE OPERATING SYSTEM ENVIRONMENT**
KONTEXTBASIERTE SCHALTUNG ZU EINER SICHEREN BETRIEBSSYSTEMUMGEBUNG
COMMUTATION BASÉE SUR LE CONTEXTE À UN ENVIRONNEMENT DE SYSTÈME D'EXPLOITATION SÉCURISÉ

(43) Date of publication of application: 20.01.2016
(73) Proprietor: Intel Corporation, Santa Clara, CA 95054 (US)
(72) Inventor: CHHABRA, Jasmeet, Hillsboro, Oregon 97124 (US); SIDDIQI, Faraz A., Portland, Oregon 97229 (US)
(74) Representative: Rummler, Felix
(86) International application number: PCT/US2013/031569
(87) International publication number: WO 2014/142904

(56) References cited:
- KR-B1- 101 132 573
- US-A1- 2002 091 803
- US-A1- 2003 005 033
- US-A1- 2003 074 581
- US-A1- 2007 083 604
- US-A1- 2008 256 536
- US-A1- 2010 031 320
- US-A1- 2010 037 321
- US-A1- 2010 146 267
- US-A1- 2011 167 474
- US-A1- 2012 066 670

## Description

### FIELD

The present disclosure relates to context based switching to a secure operating system environment, and more particularly, to context based switching to a secure operating system environment with cloud based data synchronization and filtration.

### BACKGROUND

Computing platforms and their associated operating system (OS) are vulnerable to attacks by malware, viruses and other types of malicious software that may attempt to compromise a user's sensitive or confidential data, possibly for financial gain or other illegal purposes. For example, malware may log keystrokes or capture screen images and transmit this information to a remote attacker without the user's knowledge.

Some existing approaches to deal with this problem focus on malware prevention, for example, by scanning downloaded data and programs to detect the presence of malware and block their entry to the system before they can do harm. Scanning software, however, generally requires frequent updates and can only detect older known threats, leaving systems vulnerable in an evolving threat environment.

Other approaches involve sandbox techniques, such as, for example the use of virtual machines to contain software execution that may be infected with malware.

Virtual machines typically slow down execution speed, however, which may result in unacceptable system performance. Virtual machine security may also be breached, for example, if the malware can execute before the virtual machine manager is launched.

Still other approaches rely on user diligence, in conforming to security protocols and procedures. This typically imposes an inconvenience on the user and often results in lapses on the part of the user which may result in security breaches.

US 2008/256536 A1 describes a portable secured computing environment for performing online confidential transactions in an untrusted host computer. The secured computing environment may be loaded from a portable storage device, such as a USB stick, plugged into a peripheral port of the host computer. The secured computing environment may include a virtual machine running under a host operating system of the host computer. A secured operating system may be running in the virtual machine. An online application, such as a web browser in communication with an online service, may be run under the secured operating system. Operation of the online application may be restricted by a security profile. For example, the online application may only access network addresses specifically indicated in a whitelist of the security profile.

US 2002/091803 A1 relates to a multi-user management process which enables accessing of the Internet by multiple users of a common device without jeopardizing the confidential information of the user profiles. Each user's cached information is uploaded to a predetermined server as part of a log-off process. Each user's cached information is also downloaded from the predetermined server as part of a log-on process. A processor in the common device executes a multi-user management process manages the users' cached information.

### SUMMARY OF THE INVENTION

The present invention is defined by the features of the independent claims. Preferred embodiments are defined by the features of the dependent claims.

### BRIEF DESCRIPTION OF THE DRAWINGS

Features and advantages of embodiments of the claimed subject matter will become apparent as the following Detailed Description proceeds, and upon reference to the Drawings, wherein like numerals depict like parts, and in which:
Figure 1 illustrates a top level system diagram of one example embodiment consistent with the present disclosure;
Figure 2 illustrates a block diagram of one example embodiment consistent with the present disclosure;
Figure 3 illustrates a block diagram of another example embodiment consistent with the present disclosure;
Figure 4 illustrates a block diagram of another example embodiment consistent with the present disclosure;
Figure 5 illustrates a flowchart of operations of one example embodiment consistent with the present disclosure;
Figure 6 illustrates a flowchart of operations of another example embodiment consistent with the present disclosure; and
Figure 7 illustrates a flowchart of operations of another example embodiment consistent with the present disclosure.

Although the following Detailed Description will proceed with reference being made to illustrative embodiments, many alternatives, modifications, and variations thereof will be apparent to those skilled in the art.

### DETAILED DESCRIPTION

Generally, this disclosure provides devices, systems, methods and computer readable media for context based switching from a main OS to a secure OS environment, the switch including cloud based data synchronization and filtration. Web site access may be monitored to determine if a "high value" transaction (e.g., a financial or other sensitive transaction) is being attempted or if the web site is on a list of filtered or white-listed web sites. In response to such a determination, an OS switch may be performed wherein the main OS is suspended and a copy of the secure OS, for example a read-only copy, is retrieved from secure storage and loaded as the new working copy of the OS. The retrieved secure OS may be in a "clean" state, for example, as initially provisioned from the manufacturer or provider or in any known/trusted state. The state of the working copy of the secure OS may then be updated from this clean state to a state associated with more recent activity. The state update may be based on state data received from a secure cloud-based data synchronization server.

When the transaction with the web site is completed, the new current state (e.g., reflecting the state of the secure OS working copy after completion of the transaction) may be re-synchronized with (e.g., stored back to) the secure cloud-based data synchronization server and a switch may be performed back to the main OS.

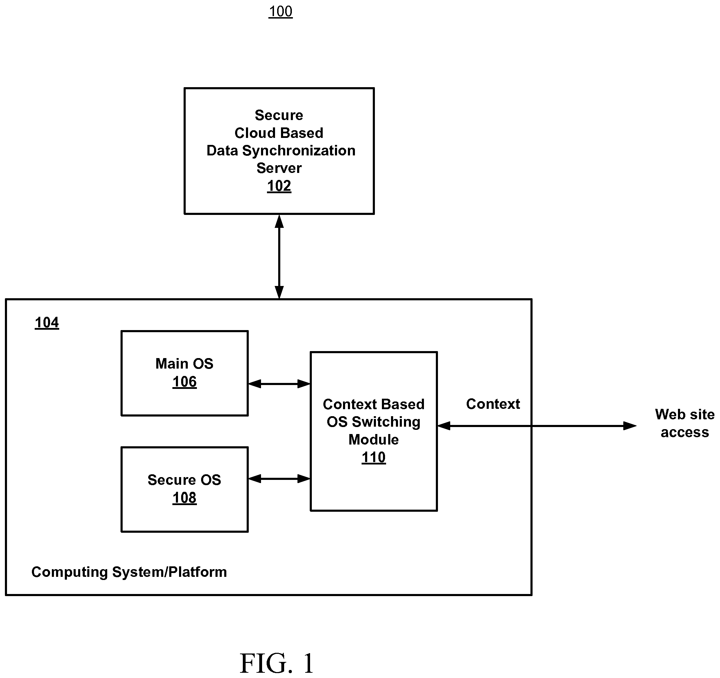

Figure 1 illustrates a top level system diagram 100 of one example embodiment consistent with the present disclosure. A computing system or platform 104 is shown to include a main OS 106, a secure OS 108 and a context-based OS switching module 110. The platform 104 may be any type of computing system, such as, for example, a desktop workstation, a laptop, a tablet, a smart phone, or any other device that includes an operating system.

Typically, the main OS 106 may perform the majority of the work associated with a user's session on the platform 104, while operations of the secure OS working copy 108 may be limited to those situations for which security is desired. In some embodiments the main OS 106 and the secure OS 108 may initially be the same, for example at the time of provisioning. Over time, however, the main OS may change through interaction with external entities such as, for example, internet transactions with web sites, some of which may be malicious, while the secure OS is maintained in a clean or initial state as will be explained in greater detail below. The context-based OS switching module 110 may be configured to switch between the main OS 106 and the secure OS 108 based on the context associated with website access and transactions, as will also be explained in greater detail below. In some embodiments, the switching may be accomplished in conjunction with synchronization of state data, for example associated with a previous invocation of the secure OS 108, between the platform 104 and a secure cloud-based data synchronization server 102.

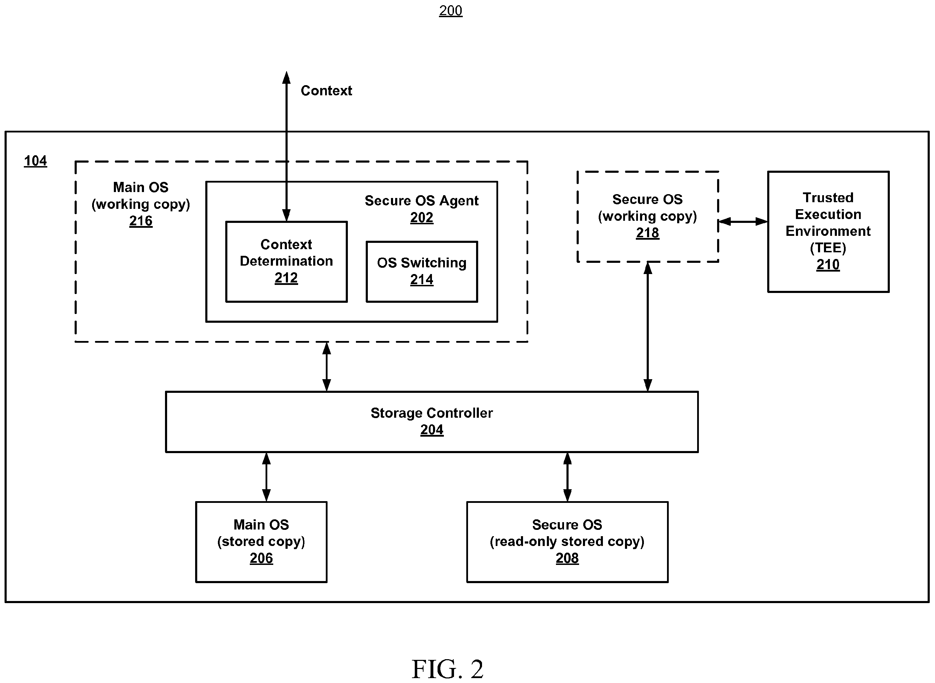

Figure 2 illustrates a block diagram 200 of one example embodiment consistent with the present disclosure. Platform 104 is shown, in greater detail, to illustrate that main OS 106 may be exist as a stored copy 206 and that secure OS 108 may also exist as a stored copy (e.g., a read-only copy) 208. During run-time, working copy 216 of the main OS and/or working copy 218 of the secure OS may be loaded and executed. Working copies 216 and 218 are drawn with dashed lines in figure 2 to indicate that they are created at run-time. Platform 104 may also include storage controller 204 and a trusted execution environment (TEE) 210, which, along with secure OS agent 202, may be components of the context based OS switching module 110 of figure 1. Storage controller 204 may be configured to maintain and access the stored copies of the main OS 206 and the read-only secure OS 208. In some embodiments, the storage controller 204 may store these copies in a solid-state memory device to facilitate more rapid switching between the working copy of the main OS 216 and the stored read only copy of secure OS 208, as well as switching back between the working copy of the secure OS 218 and the stored main OS 206. The stored secure OS 208 may be stored in a "clean" state, for example, as initially provisioned from the manufacturer or provider and may be stored as a read-only copy (or stored using any other suitable security mechanism) to prevent modifications and possible corruption or compromise. The TEE 210 may be configured to provide encryption and authentication services associated with communication between the platform 104 and the secure cloud-based data synchronization server 102, as will be explained in greater detail below.

The main OS working copy 216 may include a secure OS agent 202. The secure OS agent 202 may further include context determination module 212 and OS switching module 214. Context determination module 212 may be configured to perform context determination by monitoring access to websites that are included in a filtered list of websites that are associated with secure OS operations. This filtered list of websites, or white list, may contain websites for which secure OS operations are preferred, because, for example, confidential or sensitive data may be available. Additionally, in some embodiments, the secure OS may be limited to accessing only those websites included in the white list to further limit the possibility of a security compromise that could result from access to malicious websites. Context determination module 212 may further be configured to monitor transactions between platform 104 and these websites to determine if the transaction is a high value transaction, for example, a funds transfer or payment type transaction. High-value transactions may also include activities such as viewing documents containing data of a confidential, private, or otherwise sensitive nature. Such a high value transaction may also be associated with secure OS operations.

OS switching module 214 may be configured to switch operating systems from main OS working copy 216 to secure OS working copy 218, in response to a determination, by module 212, that secure OS operations are required. The switch may be performed by suspending the main OS working copy 216, accessing the read-only stored copy of secure OS 208 through storage controller 204, and loading and executing it as the new secure OS working copy 218.

Since the stored copy of secure OS 208 is stored in a clean or known trusted state, such as, for example, an initially provisioned state, state data may be needed for the freshly invoked working copy of secure OS 218 to update the context to a more recent operational state. The state data may be associated with a previous execution of the secure OS working copy 218 and may be obtained from the secure cloud-based data synchronization server 102. This may allow for a seamless or smooth transition from the main OS working copy 216 to the secure OS working copy 218. In some embodiments, state data may include, for example, cookies, passwords, etc., associated with one or more previous sessions or transactions performed by the secure OS working copy 218.

Because the secure OS working copy 218 is launched from a clean state, updated with state data from a secure server over an encrypted communication link, and restricted to access of web sites that are on a filtered white list (e.g., trusted), a relatively high degree of confidence may be achieved with respect to the security of this system.

When secure operations have been completed, the updated or most recent state data associated with the secure OS working copy 218 may be transmitted back to the secure cloud-based data synchronization server 102, in an encrypted or otherwise secure manner, to be employed in connection with future invocations of the secure OS. The OS may then be switched back from secure OS working copy 218 to main OS working copy 216, for example by suspending the secure OS working copy 218 and re-loading and executing the main OS stored copy 206 through storage controller 204.

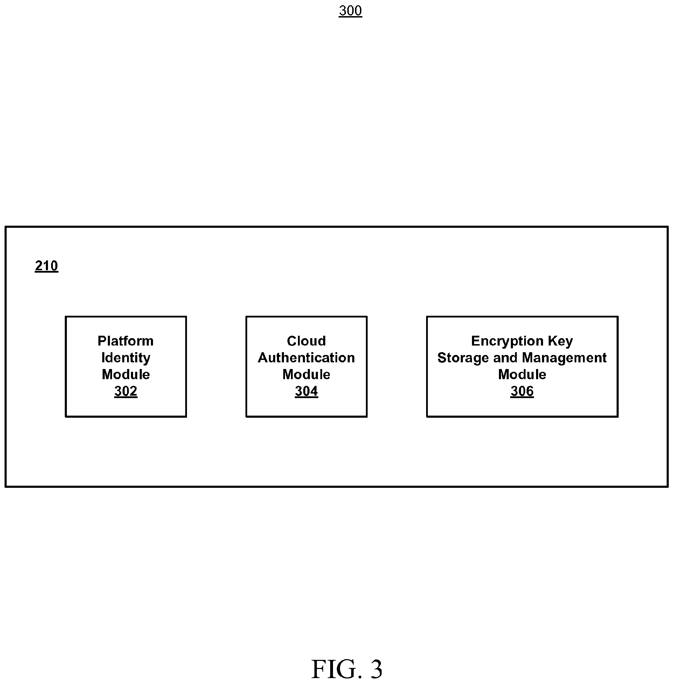

Figure 3 illustrates a block diagram 300 of another example embodiment consistent with the present disclosure. Trusted execution environment (TEE) 210 is shown to include platform identity module 302, cloud authentication module 304, and encryption key storage and management module 306. Platform identity module 302 may be configured to identify and authenticate the platform 104 to the cloud server 102. Platform identity module 302 may use anonymous ID, such as, for example Enhanced Privacy ID (EPID), for trust establishment with the cloud server. Cloud authentication module 304 may be configured to authenticate the cloud server 102 to the platform. Cloud authentication module 304 may identify the cloud server using certified keys provided to the cloud by a trusted third-party. Encryption key storage and management module 306 may be configured to store and manage the encryption keys that are used to encrypt session data, state data and/or any other communication between the platform 104 and the cloud server 102. Encryption may increase assurance that data created on the platform 104 is bound to the platform (e.g., not accessible beyond the platform).

The TEE 210 provides security and isolation from other host entities that are outside the secure OS, such as, for example, the main OS and non-trusted applications. The isolation may prevent external entities from exercising control over the secure OS. In some embodiments, the TEE 210 may comprise separate physical hardware, for example an integrated circuit (IC) that is separate from an IC associated with the platform 104. In some embodiments, the TEE 210 may comprise a separate controller or processor within an IC that is shared with the platform 104. In some embodiments, the TEE 210 may comprise a separate domain within a controller or processor that is shared with the platform 104. Various techniques may be employed to securely isolate the TEE 210 including situations where hardware is being shared between the TEE 210 and the platform 104. These techniques may include privileged execution modes associated with the processor and access protection mechanisms associated with memory.

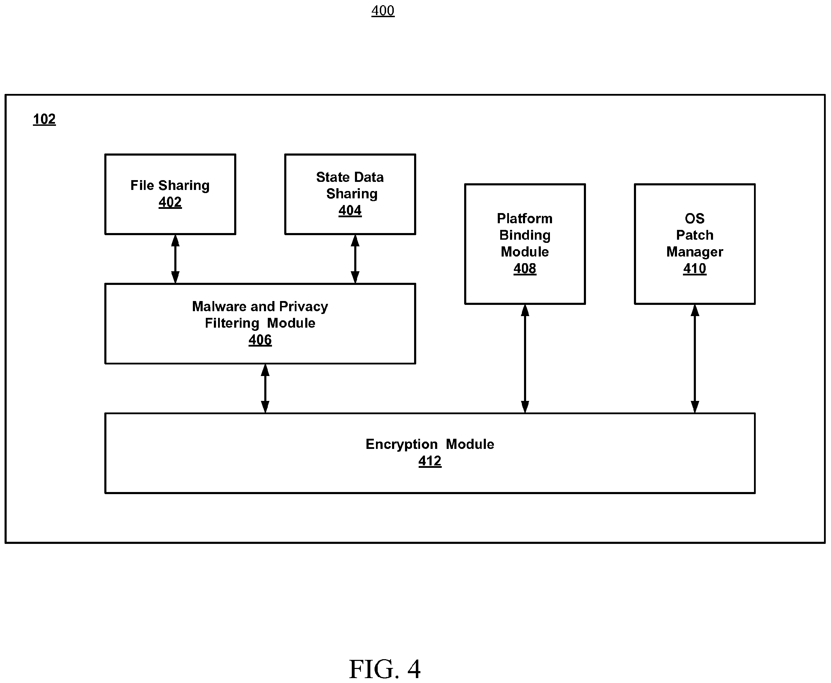

Figure 4 illustrates a block diagram 400 of another example embodiment consistent with the present disclosure. Secure cloud-based data synchronization server 102 is shown to include file sharing module 402, state data sharing module 404, malware and privacy filtering module 406, platform binding module 408, OS patch manager 410 and encryption module 412. File sharing module 402 and state data sharing module 404 may be configured to securely store data, for example state or other context data, associated with the operation of the secure OS working copy 218 on platform 104, and in particular, data associated with transitions between the main OS working copy 216 and the secure OS working copy 218. Malware and privacy filtering module 406 may be configured to filter out malware and any other malicious software that may attempt to compromise the data or files stored on the cloud server 102.

Platform binding module 408 may be configured to exchange identification information and encryption keys with platform 104 to identify and authenticate the platform and bind that platform to the cloud server.

OS patch manager 410 may be configured to securely provide patches, updates and/or any other fixes (e.g., bug fixes) to the stored copy of secure OS 208 on platform 104. The stored copy of secure OS 208 may generally be considered a "clean" copy (e.g., an originally provisioned copy) that may, in some embodiments, be stored in read-only memory to provide protection against unauthorized and potentially malicious modifications. There may, however, be occasions when authorized updates to the stored copy of secure OS 208 are appropriate. OS patch manager may therefore be configured, possibly in combination with TEE 210 and/or storage controller 204, to circumvent read-only or other restrictions to the stored copy of secure OS 208 so that these updates may be applied.

Communications between cloud server 102 and platform 104 are secured by encryption module 412 which employs the encryption keys as discussed above.

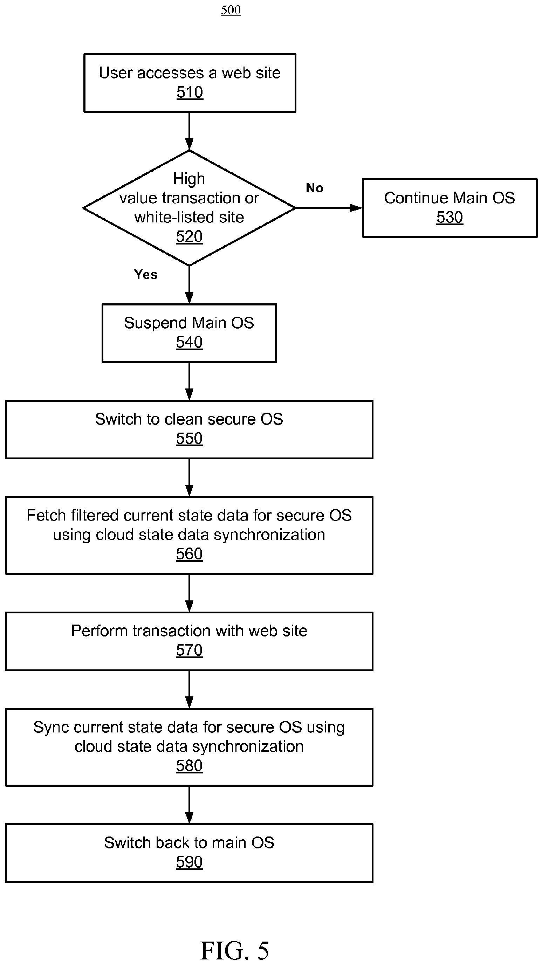

Figure 5 illustrates a flowchart of operations 500 of one example embodiment consistent with the present disclosure. At operation 510, a user accesses a website. At operation 520, a determination is made as to whether a high-value transaction is being conducted or a white listed website is being accessed. If the determination is negative, the main OS working copy, which was loaded and executed at run-time from a stored copy, continues execution at operation 530. If the determination is positive, the main OS working copy is suspended at operation 540. At operation 550, a switch is performed to a secure OS by loading and executing a working copy of the secure OS from a read-only stored copy of the secure OS. At operation 560, filtered state data, which may be associated with the context of a previous invocation of the secure OS, is fetched employing cloud server state data synchronization. At operation 570, the transaction with the website is performed. At operation 580, current state data associated with the working copy of the secure OS is synchronized with the cloud server. At operation 590, a switch is performed back to the main OS working copy.

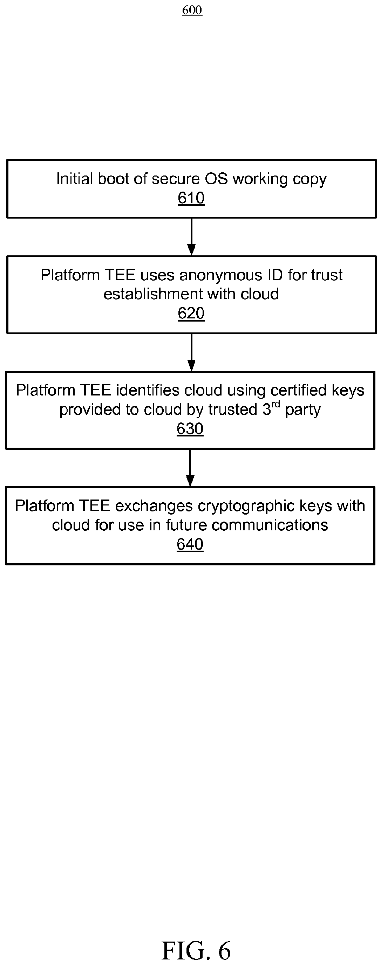

Figure 6 illustrates a flowchart of operations 600 of another example embodiment consistent with the present disclosure. An operation 610, an initial boot of the working copy of the secure OS is performed. At operation 620, the platform TEE uses anonymous ID, such as, for example Enhanced Privacy ID (EPID), for trust establishment with the cloud server. At operation 630, the platform TEE identifies the cloud server using certified keys provided to the cloud by a trusted third-party. At operation 640, the platform TEE exchanges cryptographic keys with the cloud server for use in future communications.

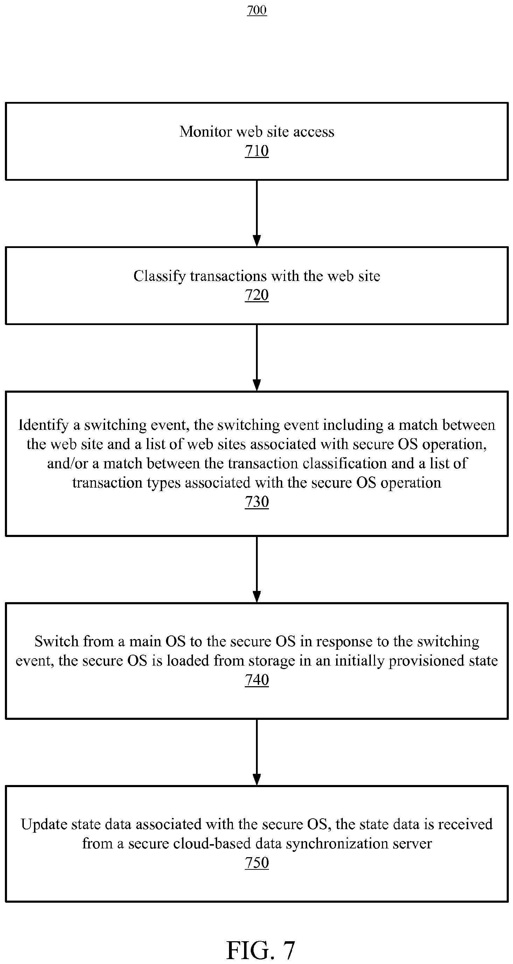

Figure 7 illustrates a flowchart of operations 700 of another example embodiment consistent with the present disclosure. The operations provide a method for context based switching to a secure OS environment. At operation 710, web site access is monitored. At operation 720, transactions with the web site are classified. At operation 730, a switching event is identified. The switching event includes a match between the web site and a list of web sites associated with secure OS operation, and/or a match between the transaction classification and a list of transaction types associated with the secure OS operation. At operation 740, a switch is made from a main OS to the secure OS in response to the switching event. The secure OS is loaded from storage in an initially provisioned or clean state. At operation 750, state data associated with the secure OS is updated. The state data is received from a secure cloud-based data synchronization server.

Embodiments of the methods described herein may be implemented in a system that includes one or more storage mediums having stored thereon, individually or in combination, instructions that when executed by one or more processors perform the methods. Here, the processor may include, for example, a system CPU (e.g., core processor) and/or programmable circuitry. Thus, it is intended that operations according to the methods described herein may be distributed across a plurality of physical devices, such as processing structures at several different physical locations. Also, it is intended that the method operations may be performed individually or in a subcombination, as would be understood by one skilled in the art. Thus, not all of the operations of each of the flow charts need to be performed, and the present disclosure expressly intends that all subcombinations of such operations are enabled as would be understood by one of ordinary skill in the art.

The storage medium may include any type of tangible medium, for example, any type of disk including floppy disks, optical disks, compact disk read-only memories (CD-ROMs), compact disk rewritables (CD-RWs), digital versatile disks (DVDs) and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, magnetic or optical cards, or any type of media suitable for storing electronic instructions.

"Circuitry", as used in any embodiment herein, may include, for example, singly or in any combination, hardwired circuitry, programmable circuitry, state machine circuitry, and/or firmware that stores instructions executed by programmable circuitry. An app may be embodied as code or instructions which may be executed on programmable circuitry such as a host processor or other programmable circuitry. A module, as used in any embodiment herein, may be embodied as circuitry. The circuitry may be embodied as an integrated circuit, such as an integrated circuit chip.

Thus, the present disclosure provides devices, systems, methods and computer readable media for context based switching to a secure OS environment including cloud based data synchronization and filtration. The following examples pertain to further embodiments.

The device may include a storage controller configured to provide read-only access to the secure OS, the secure OS stored in an initially provisioned state. The device of this example may also include a context determination module configured to monitor web site access and to classify a transaction between the device and the website. The context determination module of this example device may further be configured to identify a switching event. The device of this example may further include an OS switching module configured to switch from a main OS to the secure OS in response to the switching event, and the switch to the secure OS includes: loading the secure OS from the storage controller and updating state data associated with the secure OS, the state data received from a secure cloud-based data synchronization server.

Another example device includes the forgoing components and the switching event is a match between the web site and a list of web sites associated with secure OS operation, and/or the switching event is a match between the transaction classification and a list of transaction types associated with secure OS operation.

Another example device includes the forgoing components and the OS switching module is further configured to save the state data associated with the secure OS to the secure cloud-based data synchronization server, and to switch from the secure OS back to the main OS.

Another example device includes the forgoing components and the state data includes cookies and/or passwords.

Another example device includes the forgoing components and further includes a TEE configured to provide encryption and authentication services associated with communication between the device and the secure cloud-based data synchronization server.

Another example device includes the forgoing components and the list of web sites associated with secure OS operation includes an ERM web site.

Another example device includes the forgoing components and the list of transaction types associated with secure OS operation includes a fund transfer or payment transaction.

Another example device includes the forgoing components and the storage controller is further configured to enable patch updates to the secure OS, the patch updates provided by the secure cloud-based data synchronization server.

Another example device includes the forgoing components and the secure cloud-based data synchronization server is configured to provide malware filtering of the state data.

According to another aspect there is provided a method. The method may include monitoring web site access. The method of this example may also include classifying transactions with the web site. The method of this example may further include identifying a switching event, and the switching event includes a match between the web site and a list of web sites associated with secure OS operation, and/or a match between the transaction classification and a list of transaction types associated with the secure OS operation. The method of this example may further include switching from a main OS to the secure OS in response to the switching event, and the secure OS is loaded from storage in an initially provisioned state. The method of this example may further include updating state data associated with the secure OS, the state data is received from a secure cloud-based data synchronization server.

Another example method includes the forgoing operations and further includes saving the state data associated with the secure OS to the secure cloud-based data synchronization server, and switching from the secure OS back to the main OS.

Another example method includes the forgoing operations and the state data includes cookies and/or passwords.

Another example method includes the forgoing operations and further includes providing a TEE to store and manage encryption keys.

Another example method includes the forgoing operations and further includes identifying, authenticating and communicating with the secure cloud-based data synchronization server using the encryption keys.

Another example method includes the forgoing operations and the web site associated with secure OS operation is an ERM web site.

Another example method includes the forgoing operations and the transaction type associated with secure OS operation is a fund transfer or payment transaction.

Another example method includes the forgoing operations and further includes applying patch updates to the secure OS, the patch updates provided by the secure cloud-based data synchronization server.

Another example method includes the forgoing operations and further includes malware filtering of the state data.

According to another aspect there is provided a system. The system may include a means for monitoring web site access. The system of this example may also include a means for classifying transactions with the web site. The system of this example may further include a means for identifying a switching event, and the switching event includes a match between the web site and a list of web sites associated with secure OS operation, and/or a match between the transaction classification and a list of transaction types associated with the secure OS operation. The system of this example may further include a means for switching from a main OS to the secure OS in response to the switching event, and the secure OS is loaded from storage in an initially provisioned state. The system of this example may further include a means for updating state data associated with the secure OS, the state data is received from a secure cloud-based data synchronization server.

Another example system includes the forgoing components and further includes a means for saving the state data associated with the secure OS to the secure cloud-based data synchronization server, and a means for switching from the secure OS back to the main OS.

Another example system includes the forgoing components and the state data includes cookies and/or passwords.

Another example system includes the forgoing components and further includes means for providing a TEE to store and means to manage encryption keys.

Another example system includes the forgoing components and further includes means for identifying, authenticating and communicating with the secure cloud-based data synchronization server using the encryption keys.

Another example system includes the forgoing components and the web site associated with secure OS operation is an ERM web site.

Another example system includes the forgoing components and the transaction type associated with secure OS operation is a fund transfer or payment transaction.

Another example system includes the forgoing components and further includes means for applying patch updates to the secure OS, the patch updates provided by the secure cloud-based data synchronization server.

Another example system includes the forgoing components and further includes means for malware filtering of the state data.

According to another aspect there is provided at least one computer-readable storage medium having instructions stored thereon which when executed by a processor, cause the processor to perform the operations of the method as described in any of the examples above.

According to another aspect there is provided an apparatus including means to perform a method as described in any of the examples above.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents. Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications.

## Claims

1. A device (200) for context based switching to a secure operating system (OS), said device comprising:
a storage controller (204) configured to provide read-only access to a stored copy of said secure OS, wherein said stored copy is a copy of the secure OS in an initially provisioned state;
a context determination module (212) configured to:
monitor web site access;
classify a transaction between the device and the web site; and
identify a switching event; and
an OS switching module (214) configured to switch from a main OS to said secure OS during runtime in response to said switching event, wherein said switch to said secure OS comprises:
suspending the main OS;
loading said secure OS from said storage controller as a working copy of the secure OS;
receiving state data associated with the secure OS from a secure cloud-based data synchronization server; and
updating, with the received state data, the working copy of the secure OS from the initially provisioned state to a more recent operational state.

2. The device (200) of claim 1, wherein said switching event is a match between said web site and a list of web sites associated with secure OS operation, and/or said switching event is a match between said transaction classification and a list of transaction types associated with said secure OS operation.

3. The device (200) of claim 1, wherein said OS switching module (214) is further configured to save state data associated with the working copy of said secure OS to said secure cloud-based data synchronization server, and to switch from the working copy of said secure OS back to said main OS.

4. The device (200) of claim 1, further comprising a Trusted Execution Environment (TEE) (210) configured to provide encryption and authentication services associated with communication between said device and said secure cloud-based data synchronization server.

5. The device (200) of claim 1, wherein said secure cloud-based data synchronization server is configured to provide malware filtering of said state data.

6. A method (700) for context based switching to a secure OS, said method comprising:
monitoring (710) web site access;
classifying (720) transactions with said web site;
identifying (730) a switching event, wherein said switching event includes a match between said web site and a list of web sites associated with secure OS operation, and/or a match between said transaction classification and a list of transaction types associated with said secure OS operation;
switching (740) from a main OS to said secure OS during runtime in response to said switching event, wherein said switching comprises:
suspending the main OS;
loading a working copy of the secure OS from a stored copy of the secure OS, wherein the stored copy of the secure OS is a copy of the secure OS in an initially provisioned state;
receiving state data from a secure cloud-based data synchronization server; and
updating, with the received state data, the working copy of the secure OS from the initially provisioned state to a more recent operational state.

7. The method (700) of claim 6, further comprising:
saving state data associated with the working copy of said secure OS to said secure cloud-based data synchronization server; and
switching from the working copy of said secure OS back to said main OS.

8. The method (700) of claim 6, further comprising providing a trusted execution environment (TEE) to store and manage encryption keys.

9. The method (700) of claim 8, further comprising identifying, authenticating and communicating with said secure cloud-based data synchronization server using said encryption keys.

10. The method (700) of claim 6, wherein said transaction type associated with secure OS operation is a fund transfer or payment transaction.

11. The method (700) of claim 6, further comprising applying patch updates to said secure OS, said patch updates provided by said secure cloud-based data synchronization server.

12. A computer-readable storage medium having instructions stored thereon which when executed by a processor result in the performance of operations to carry out a method in accordance with any one of claims 6 to 11.

13. An apparatus comprising means to perform a method as claimed in any of claims 6 through 11.

## Patentansprüche

1. Einrichtung (200) für kontextbasiertes Wechseln zu einem sicheren Betriebssystem (OS), wobei die Einrichtung umfasst:
eine Speichersteuerung (204), die ausgelegt ist, schreibgeschützten Zugriff auf eine gespeicherte Kopie des sicheren OS bereitzustellen, wobei die gespeicherte Kopie eine Kopie des sicheren OS in einem anfänglich bereitgestellten Zustand ist;
ein Kontextermittlungsmodul (212), das ausgelegt ist:
einen Websitezugriff zu überwachen;
eine Transaktion zwischen der Einrichtung und der Website zu klassifizieren; und
ein Wechselereignis zu identifizieren; und
ein OS-Wechselmodul (214), das ausgelegt ist, als Reaktion auf das Wechselereignis während der Laufzeit von einem Haupt-OS zu dem sicheren OS zu wechseln, wobei der Wechsel zu dem sicheren OS umfasst:
Anhalten des Haupt-OS;
Laden des sicheren OS aus der Speichersteuerung als eine Arbeitskopie des sicheren OS;
Empfangen von mit dem sicheren OS assoziierten Zustandsdaten aus einem sicheren cloudbasierten Datensynchronisierungserver; und
Aktualisieren, mit den empfangenen Zustandsdaten, der Arbeitskopie des sicheren OS vom anfänglich bereitgestellten Zustand auf einen neueren Betriebszustand.

2. Einrichtung (200) nach Anspruch 1, wobei das Wechselereignis eine Übereinstimmung zwischen der Website und einer Liste von Websites ist, die mit einem sicheren OS-Betrieb assoziiert sind, und/oder das Wechselereignis eine Übereinstimmung zwischen der Transaktionsklassifizierung und einer Liste der mit dem sicheren OS-Betrieb assoziierten Transaktionstypen ist.

3. Einrichtung (200) nach Anspruch 1, wobei das OS-Wechselmodul (214) ferner ausgelegt ist, die mit der Arbeitskopie des sicheren OS assoziierten Zustandsdaten in den sicheren cloudbasierten Datensynchronisierungsserver zu speichern und von der Arbeitskopie des sicheren OS zurück zu dem Haupt-OS zu wechseln.

4. Einrichtung (200) nach Anspruch 1, die ferner eine vertrauenswürdige Ausführungsumgebung (TEE) (210) umfasst, die ausgelegt ist, Verschlüsselungs- und Authentifizierungsdienste bereitzustellen, die mit einer Kommunikation zwischen der Einrichtung und dem sicheren cloudbasierten Datensynchronisierungsserver assoziiert sind.

5. Einrichtung (200) nach Anspruch 1, wobei der sichere cloudbasierte Datensynchronisierungsserver ausgelegt ist, eine Malwarefilterung der Zustandsdaten bereitzustellen.

6. Verfahren (700) für kontextbasiertes Wechseln zu einem sicheren OS, wobei das Verfahren umfasst:
Überwachen (710) eines Websitezugriffs;
Klassifizieren (720) von Transaktionen mit der Website;
Identifizieren (730) eines Wechselereignisses, wobei das Wechselereignis eine Übereinstimmung zwischen der Website und einer Liste von Websites, die mit einem sicheren OS-Betrieb assoziiert sind, und/oder eine Übereinstimmung zwischen der Transaktionsklassifizierung und einer Liste der mit dem sicheren OS-Betrieb assoziierten Transaktionstypen enthält;
Wechseln (740) von einem Haupt-OS zu dem sicheren OS während der Laufzeit als Reaktion auf das Wechselereignis, wobei das Wechseln umfasst:
Anhalten des Haupt-OS;
Laden einer Arbeitskopie des sicheren OS von einer gespeicherten Kopie des sicheren OS, wobei die gespeicherte Kopie des sicheren OS eine Kopie des sicheren OS in einem anfänglich bereitgestellten Zustand ist;
Empfangen von Zustandsdaten von einem sicheren cloudbasierten Datensynchronisierungsserver; und
Aktualisieren, mit den empfangenen Zustandsdaten, der Arbeitskopie des sicheren OS vom anfänglich bereitgestellten Zustand auf einen neueren Betriebszustand.

7. Verfahren (700) nach Anspruch 6, ferner umfassend:
Speichern von mit der Arbeitskopie des sicheren OS assoziierten Zustandsdaten auf den sicheren cloudbasierten Datensynchronisierungsserver; und
Wechseln von der Arbeitskopie des sicheren OS zurück zu dem Haupt-OS.

8. Verfahren (700) nach Anspruch 6, das ferner ein Bereitstellen einer vertrauenswürdigen Ausführungsumgebung (TEE) umfasst, um Verschlüsselungsschlüssel zu speichern und zu verwalten.

9. Verfahren (700) nach Anspruch 8, das ferner ein Identifizieren, Authentifizieren und Kommunizieren mit dem sicheren cloudbasierten Datensynchronisierungsserver unter Verwendung der Verschlüsselungsschlüssel umfasst.

10. Verfahren (700) nach Anspruch 6, wobei der mit einem sicheren OS-Betrieb assoziierte Transaktionstyp ein Transfer von Geldmitteln oder eine Zahlungstransaktion ist.

11. Verfahren (700) nach Anspruch 6, das ferner ein Anwenden von Korrekturaktualisierungen auf das sichere OS umfasst, wobei die Korrekturaktualisierungen von dem sicheren cloudbasierten Datensynchronisierungsserver bereitgestellt werden.

12. Computerlesbares Speichermedium, das darauf gespeicherte computerausführbare Anweisungen aufweist, die, wenn sie von einem Prozessor ausgeführt werden, in der Durchführung von Vorgängen resultieren, um ein Verfahren nach einem der Ansprüche 6 bis 11 auszuführen.

13. Vorrichtung, die Mittel zum Durchführen eines Verfahrens nach einem der Ansprüche 6 bis 11 umfasst.

## Revendications

1. Dispositif (200) de commutation, basée sur le contexte, sur un système d'exploitation (OS) sécurisé, ledit dispositif comprenant :
un contrôleur de stockage (204) configuré pour donner accès en lecture seule à une copie stockée dudit OS sécurisé, ladite copie stockée consistant en une copie de l'OS sécurisé dans un état initialement fourni ;
un module de détermination de contexte (212) configuré pour :
surveiller l'accès à un site Web ;
classifier une transaction entre le dispositif et le site Web ; et
identifier un événement de commutation ; et
un module de commutation d'OS (214) configuré pour commuter depuis un OS principal sur ledit OS sécurisé en cours d'exécution en réponse audit événement de commutation, ladite commutation sur ledit OS sécurisé comprenant :
la suspension de l'OS principal ;
le chargement dudit OS sécurisé à partir dudit contrôleur de stockage comme une copie de travail de l'OS sécurisé ;
la réception de données d'état associées à l'OS sécurisé depuis un serveur de synchronisation de données en nuage sécurisé ; et
la mise à jour, au moyen des données d'état reçues, de la copie de travail de l'OS sécurisé de l'état initialement fourni à un état de fonctionnement plus récent.

2. Dispositif (200) selon la revendication 1, dans lequel ledit événement de commutation consiste en une concordance entre ledit site Web et une liste de sites Web associée à une exploitation d'OS sécurisée et/ou ledit événement de commutation consiste en une concordance entre ladite classification de la transaction et une liste de types de transaction associée à ladite exploitation d'OS sécurisée.

3. Dispositif (200) selon la revendication 1, dans lequel ledit module de commutation d'OS (214) est configuré en outre pour sauvegarder des données d'état associées à la copie de travail dudit OS sécurisé sur ledit serveur de synchronisation de données en nuage sécurisé et pour recommuter depuis la copie de travail dudit OS sécurisé sur ledit OS principal.

4. Dispositif (200) selon la revendication 1, comprenant en outre un environnement d'exécution de confiance (TEE) (210) configuré pour fournir des services de chiffrement et d'authentification associés à une communication entre ledit dispositif et ledit serveur de synchronisation de données en nuage sécurisé.

5. Dispositif (200) selon la revendication 1, dans lequel ledit serveur de synchronisation de données en nuage sécurisé est configuré pour assurer un filtrage desdites données d'état contre tout logiciel malveillant.

6. Procédé (700) de commutation, basée sur le contexte, sur un OS sécurisé, ledit procédé comprenant :
la surveillance (710) de l'accès à un site Web ;
la classification (720) de transactions avec ledit site Web ; et
l'identification (730) d'un événement de commutation, ledit événement de commutation comportant une concordance entre ledit site Web et une liste de sites Web associée à une exploitation d'OS sécurisée et/ou une concordance entre ladite classification des transactions et une liste de types de transaction associée à ladite exploitation d'OS sécurisée ;
la commutation (740) depuis un OS principal sur ledit OS sécurisé en cours d'exécution en réponse audit événement de commutation, ladite commutation comprenant :
la suspension de l'OS principal ;
le chargement d'une copie de travail de l'OS sécurisé à partir d'une copie stockée de l'OS sécurisé, la copie stockée de l'OS sécurisé consistant en une copie de l'OS sécurisé dans un état initialement fourni ;
la réception de données d'état depuis un serveur de synchronisation de données en nuage sécurisé ; et
la mise à jour, au moyen des données d'état reçues, de la copie de travail de l'OS sécurisé de l'état initialement fourni à un état de fonctionnement plus récent.

7. Procédé (700) selon la revendication 6, comprenant en outre :
la sauvegarde de données d'état associées à la copie de travail dudit OS sécurisé sur ledit serveur de synchronisation de données en nuage sécurisé ; et
la recommutation depuis la copie de travail dudit OS sécurisé sur ledit OS principal.

8. Procédé (700) selon la revendication 6, comprenant en outre la fourniture d'un environnement d'exécution de confiance (TEE) permettant le stockage et la gestion de clés de chiffrement.

9. Procédé (700) selon la revendication 8, comprenant en outre l'identification, l'authentification et la communication avec ledit serveur de synchronisation de données en nuage sécurisé au moyen desdites clés de chiffrement.

10. Procédé (700) selon la revendication 6, dans lequel ledit type de transaction associé à une exploitation d'OS sécurisée est une transaction portant sur un paiement ou un transfert de fonds.

11. Procédé (700) selon la revendication 6, comprenant en outre l'application de mises à jour par patch audit OS sécurisé, lesdites mises à jour par patch étant fournies par ledit serveur de synchronisation de données en nuage sécurisé.

12. Support de stockage lisible par ordinateur sur lequel sont stockées des instructions qui, une fois exécutées par un processeur, conduisent à la mise en oeuvre d'opérations visant à accomplir un procédé selon l'une quelconque des revendications 6 à 11.

13. Appareil comprenant des moyens de mise en oeuvre d'un procédé selon l'une quelconque des revendications 6 à 11.
